(19) **Europäisches Patentamt**
**European Patent Office**
**Office européen des brevets**

(11) **EP 3 977 220 B1**

(12) **EUROPÄISCHE PATENTSCHRIFT**

(45) Veröffentlichungstag und Bekanntmachung des Hinweises auf die Patenterteilung:
**22.11.2023 Patentblatt 2023/47**

(21) Anmeldenummer: **20728914.1**

(22) Anmeldetag: **18.05.2020**

(51) Internationale Patentklassifikation (IPC):
**G05B 19/418** (2006.01)

(52) Gemeinsame Patentklassifikation (CPC):
**G05B 19/41805; G05B 19/41875;**
G05B 2219/32187; G05B 2219/32212; Y02P 90/02

(86) Internationale Anmeldenummer:
**PCT/DE2020/000096**

(87) Internationale Veröffentlichungsnummer:
**WO 2020/239150 (03.12.2020 Gazette 2020/49)**

(54) **BAUTEILPRÜFUNG**

COMPONENT TESTING

CONTRÔLE DE COMPOSANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.05.2019 DE 102019207618**

(43) Veröffentlichungstag der Anmeldung:
**06.04.2022 Patentblatt 2022/14**

(73) Patentinhaber: **MTU Aero Engines AG**
**80995 München (DE)**

(72) Erfinder:
• **EICHLER, Christian**
**80995 München (DE)**

• **FRENO, Dieter**
**80995 München (DE)**
• **HIEBER, Andreas**
**80995 München (DE)**
• **FARAH, Philipp**
**80995 München (DE)**
• **GASSMANN, Salome**
**80995 München (DE)**

(56) Entgegenhaltungen:
**EP-A1- 2 993 541    EP-A1- 3 045 992**
**EP-A2- 3 082 004    WO-A1-2016/046729**

**Beschreibung**

Die vorliegende Erfindung betrifft ein Verfahren zur Prüfung eines Bauteils, insbesondere eines Flugtriebwerks, ein Verfahren zum Vorgeben eines Toleranzbereichs für diese Bauteilprüfung sowie ein System und Computerprogrammprodukt zur Durchführung.

Bei Bauteilen von Flugtriebwerken muss die Einhaltung geforderter Toleranzen besonders präzise und zuverlässig geprüft werden. Die vorliegende Erfindung kann daher mit besonderem Vorteil für die Prüfung von Flugtriebwerk-Bauteilen verwendet werden, ohne jedoch hierauf beschränkt zu sein.

Bisher wird bei Bauteilen für verschiedene vorgegebene Bauteilparameter einzeln geprüft, ob der Wert des entsprechenden Bauteilparameters innerhalb eines vorgegebenen Toleranzfeldes liegt, beispielsweise ein Istmaß ein Nennmaß höchstens um ein vorgegebenes oberes Grenzmaß über- und höchstens um ein vorgegebenes unteres Grenzmaß unterschreitet.

Liegt nur ein solcher Istwert außerhalb des für ihn vorgegebenen Toleranzfeldes, wird das Bauteil aussortiert. Dies führt häufig, insbesondere bei Bauteilprüfungen von Flugtriebwerk-Bauteilen, zu hohen Ausschussraten.

Die EP 2 993 541 A1 betrifft ein Verfahren zur Qualitätsbeurteilung eines mittels eines additiven Herstellungsverfahrens hergestellten Bauteils, wobei im Rahmen des Verfahrens zunächst geprüft wird, ob das Bauteil vorbestimmte Absolutgrenzen verletzt, um das Vorliegen gravierender Störungen im additiven Herstellungsprozess auszuschließen, anschließend ein bauteilabhängiger Soll-Prozess ermittelt wird und anhand dieses Soll-Prozesses die Grenzen für Abweichungen festgelegt, abweichende Ist-Werte des Bauteils isoliert und mittels verschiedener Kenngrößen bewertet werden.

In der WO 2016/046729 A1 wird ein Inspektionswerkzeug zur Verwendung während der Inspektion von Komponenten beschrieben, das den Vergleich von Messdaten mit Nominaldaten ermöglicht und ergänzende Informationen zu mindestens einem Merkmal des Bauteils liefert.

Die EP 3 082 004 A2 betrifft ein Verfahren zur Wartung einer gebrauchten Gasturbine mit den wenigstens teilweise automatisierten Schritten: Ermitteln einer Geometrie eines strömungsführenden Bauteils, insbesondere einer Lauf- oder Leitschaufel, der Gasturbine, Prognostizieren einer Aero- und/oder Thermodynamik des Bauteils auf Basis der ermittelten Geometrie und Klassieren des Bauteils in eine von mehreren vorgegebenen Klassen, insbesondere Güteklassen, auf Basis der prognostizierten Aero- und/oder Thermodynamik.

Die EP 3 045 992 A1 betrifft ein Verfahren zum Steuern eines Produktionsprozesses eines Objekts in einer Produktionsanlage und zum Kompensieren von Fehlern, die in dem Produktionsprozess auftreten, wobei das Verfahren ein Erzeugen von aktuellen Eigenschaftsdaten, die erhaltene Werte von Eigenschaften mindestens eines Musterobjekts, hergestellt in der Produktionsanlage nach einem Produktionsmodell, umfassen, ein Durchführen eines Nominal-Aktuell-Vergleichs mit den erhaltenen Werten von Eigenschaften der aktuellen Eigenschaftsdaten und gesetzten Werten entsprechender Eigenschaften von Nominal-Eigenschaftsdaten des Objekts, wodurch Abweichungsdaten erzeugt werden, und ein automatisches Erstellen eines angepassten Produktionsmodells basierend auf den Nominal-Eigenschaftsdaten und den Abweichungsdaten, umfasst, wobei das angepasste Produktionsmodell in einem angepassten Produktionsprozess zum Herstellen eines angepassten Objekts in der Produktionsanlage verwendbar ist, und sich von den Nominal-Eigenschaftsdaten unterscheidet, so dass die im Produktionsprozess auftretenden Fehler im angepassten Produktionsprozess zumindest teilweise kompensiert werden.

Eine Aufgabe einer Ausführung der vorliegenden Erfindung ist es, die Raten bemängelter Bauteile, insbesondere Ausschussraten, bei Bauteilprüfungen zu verbessern.

Diese Aufgabe wird durch ein Verfahren zur Bauteilprüfung mit den Merkmalen des Anspruchs 1 gelöst. Ansprüche 10, 13 und 14 stellen ein Verfahren zum Vorgeben eines Toleranzbereichs für eine hier beschriebene Bauteilprüfung, ein System und ein Computerprogrammprodukt zur Durchführung eines hier beschriebenen Verfahrens unter Schutz. Vorteilhafte Ausführungsformen der Erfindung sind Gegenstand der Unteransprüche.

Nach einer Ausführung der vorliegenden Erfindung weist ein Verfahren zur Prüfung eines Bauteils, in einer bevorzugten Ausführung eines Bauteils für ein, insbesondere eines, Flugtriebwerk(s), die Schritte auf:

- Ermitteln eines Wertes eines ersten Parameters des Bauteils, für den eine (zulässige) Toleranz vorgegeben ist ("tolerierter Parameter");
- Ermitteln eines Wertes eines zweiten tolerierten Parameters des Bauteils; und
- Klassifizieren des Bauteils in eine vorgegebene Güteklasse, in einer Ausführung eine, insbesondere schlechtere, von zwei oder mehr vorgegebenen Güteklassen, falls dieses Wertepaar außerhalb eines vorgegebenen, in einer Ausführung abgeschlossenen, Toleranzbereichs liegt, dessen obere und/oder untere Grenze für den zweiten Parameter in wenigstens einem ersten zulässigen Wertebereich des ersten Parameters, in einer Ausführung linear, von dem ersten Parameter abhängt.

Dem liegt die Idee zugrunde, dass eine starke Abweichung eines Istwertes eines Bauteilparameters von seinem vorgegebenen Soll- bzw. Nennwert durch eine (ausreichend) geringe Abweichung eines Istwertes eines anderen Bauteilparameters von seinem vorgegebenen Soll- bzw. Nennwert kompensiert werden kann.

Dadurch kann in einer Ausführung die Rate bemängelter Bauteile, insbesondere die Ausschussrate, reduziert und dabei vorteilhafterweise gleichwohl die Eignung der nicht bemängelten Bauteile gewährleistet werden.

Durch eine lineare Abhängigkeit kann in einer Ausführung die Prüfung vereinfacht, ihre Zuverlässigkeit erhöht und/oder die hierfür benötigte Zeit reduziert werden. Entsprechend wird bzw. ist in einer Ausführung diese obere und/oder untere Grenze für den zweiten Parameter in dem ersten zulässigen Wertebereich des ersten Parameters durch eine Ungleichung der Form

$$\text{erster Koeffizient} \times \text{Wert ersten Parameters - zweiter Koeffizient} \times \text{Wert zweiten Parameters} \geq \text{Konstante oder}$$

$$\text{erster Koeffizient} \times \text{Wert ersten Parameters - zweiter Koeffizient} \times \text{Wert zweiten Parameters} > \text{Konstante oder}$$

$$\text{erster Koeffizient} \times \text{Wert ersten Parameters - zweiter Koeffizient} \times \text{Wert zweiten Parameters} \leq \text{Konstante oder}$$

$$\text{erster Koeffizient} \times \text{Wert ersten Parameters - zweiter Koeffizient} \times \text{Wert zweiten Parameters} < \text{Konstante}$$

beschrieben, wobei die Koeffzienten größer oder kleiner Null sein können.

In einer Ausführung hängt die obere und/oder untere Grenze des Toleranzbereichs für den zweiten Parameter in wenigstens einem zweiten zulässigen Wertebereich des ersten Parameters, in einer Ausführung linear, gegensinnig bzw. -läufig zu dem ersten zulässigen Wertebereich von dem ersten Parameter ab. Erlaubt somit ein steigender Wert des ersten Parameters innerhalb des ersten zulässigen Wertebereichs eine wachsende Abweichung des zweiten Parameters von seinem Sollwert, erlaubt die gegensinnige Grenze bei sinkendem Wert des ersten Parameters innerhalb des zweiten zulässigen Wertebereichs eine wachsende Abweichung des zweiten Parameters von seinem Sollwert.

Dadurch kann in einer Ausführung eine starke Abweichung eines Istwertes eines Bauteilparameters von seinem vorgegebenen Sollwert in beide Richtungen jeweils durch eine (ausreichend) geringe Abweichung eines Istwertes eines anderen Bauteilparameters von seinem vorgegebenen Sollwert kompensiert und hierdurch die Rate bemängelter Bauteile, insbesondere die Ausschussrate, (weiter) reduziert werden. In einer Ausführung wird bzw. ist diese obere und/oder untere Grenze für den zweiten Parameter in dem zweiten zulässigen Wertebereich des ersten Parameters durch eine Ungleichung der oben erläuterten Form

$$\text{erster Koeffizient} \times \text{Wert ersten Parameters - zweiter Koeffizient} \times \text{Wert zweiten Parameters} \geq, >, \leq \text{ bzw. } < \text{Konstante}$$

beschrieben.

In einer Ausführung enthält der erste zulässige Wertebereich des ersten Parameters einen minimal oder maximal zulässigen Wert des ersten Parameters. In einer Weiterbildung enthält der erste zulässige Wertebereich des ersten Parameters einen minimal zulässigen Wert des ersten Parameters und der zweite zulässige Wertebereich des ersten Parameters einen maximal zulässigen Wert des ersten Parameters.

Dadurch kann in einer Ausführung eine starke Abweichung eines Istwertes eines Bauteilparameters von seinem vorgegebenen Sollwert, insbesondere in beide Richtungen jeweils, durch eine geringe Abweichung eines Istwertes eines anderen Bauteilparameters von seinem vorgegebenen Sollwert kompensiert und hierdurch die Rate bemängelter Bauteile, insbesondere die Ausschussrate, (weiter) reduziert werden.

In einer Ausführung ist die obere und/oder untere Grenze des Toleranzbereichs für den zweiten Parameter in wenigstens einem zulässigen Wertebereich des ersten Parameters von dem ersten Parameter unabhängig, der vorliegend ohne Beschränkung der Allgemeinheit als weiterer zulässiger Wertebereich des ersten Parameters bezeichnet wird, so dass der vorstehend erläuterte zweite Wertebereich vorhanden sein kann, aber nicht muss.

Dem liegt die Idee zugrunde, dass zu starke Abweichungen eines Istwertes eines Bauteilparameters von seinem vorgegebenen Sollwert nicht mehr durch geringe Abweichungen eines Istwertes eines anderen Bauteilparameters von seinem vorgegebenen Sollwert kompensiert werden können.

In einer Ausführung weist das Verfahren die Schritte auf:

- Ermitteln eines Wertes wenigstens eines dritten tolerierten Parameters des Bauteils; und
- Klassifizieren des Bauteils in die vorgegebene Güteklasse, falls dieser Wert außerhalb eines vorgegebenen dritten Toleranzfeldes liegt.

Dem liegt die Idee zugrunde, zusätzlich zu dem ersten und zweiten Bauteilparameter wenigstens einen weiteren Bauteilparameter zu prüfen, für den eine zu starke Abweichung seines Istwertes von seinem vorgegebenen Soll- bzw. Nennwert nicht durch geringe Abweichungen eines Istwertes eines anderen Bauteilparameters von seinem vorgegebenen Sollwert kompensiert werden kann.

In einer Ausführung weist das Verfahren den Schritt auf:

- Klassifizieren des Bauteils in die vorgegebene Güteklasse, falls der Wert des ersten Parameters außerhalb eines vorgegebenen maximalen ersten Toleranzfeldes liegt.

Zusätzlich oder alternativ weist das Verfahren den Schritt auf:

- Klassifizieren des Bauteils in die vorgegebene Güteklasse, falls der Wert des zweiten Parameters außerhalb eines vorgegebenen maximalen zweiten Toleranzfeldes liegt.

Somit definiert bzw. umfasst in einer Ausführung der vorgegebene Toleranzbereich ein vorgegebenes maximales erstes Toleranzfeld und/oder ein vorgegebenes maximales zweites Toleranzfeld, das der erste bzw. zweite Bauteilparameter in jedem Fall einhalten muss.

In einer Ausführung wird das Bauteil verworfen, falls es in die vorgegebene Güteklasse klassifiziert wird bzw. worden ist. Hierdurch kann in einer Ausführung die Ausschussrate reduziert werden.

In einer anderen Ausführung wird das Bauteil nachbearbeitet bzw. hierzu vorgesehen, insbesondere aussortiert und/oder gekennzeichnet, falls es in die vorgegebene Güteklasse klassifiziert wird bzw. worden ist. Hierdurch kann in einer Ausführung der Nachbearbeitungsaufwand reduziert werden.

Nach einer Ausführung der vorliegenden Erfindung wird bzw. ist die Abhängigkeit der oberen und/oder unteren Grenze des zulässigen Toleranzfeldes für den zweiten Parameter von dem ersten Parameter in dem ersten und/oder zweiten zulässigen Wertebereich des ersten Parameters auf Basis einer, in einer Ausführung strukturmechanischen, Eigenschaft, in einer Ausführung Funktionsfähigkeit, des Bauteiltyps des Bauteils vorgegeben, die von einer Kombination des ersten und zweiten Parameters abhängt.

Dem liegt die Idee zugrunde, gezielt Parameter zu identifizieren, die, insbesondere deren Toleranzen, in Kombination miteinander bzw. voneinander abhängig eine solche Eigenschaft des Bauteil(typ)s beeinflussen, und dann gezielt entsprechende Toleranzbereiche vorzugeben. Entsprechend wirken sich in einer Ausführung die Toleranz des ersten Parameters und des zweiten Parameters auf eine, in einer Ausführung strukturmechanische, Eigenschaft, in einer Ausführung Funktionsfähigkeit, des Bauteiltyps des Bauteils aus bzw. wird bzw. ist der zulässige Toleranzbereich entsprechend vorgegeben.

Die Erfindung kann aufgrund der Montage- und Betriebsbedingungen mit besonderem Vorteil für die Prüfung von Lauf- und Leitschaufeln von Gasturbinen, insbesondere Flugtriebwerk-Gasturbinen, verwendet werden.

In einer Ausführung ist bzw. wird für den ersten tolerierten Parameter eine Maßtoleranz, insbesondere eine Maßtoleranz einer Länge oder eine Maßtoleranz eines Abstandes, in einer Ausführung zwischen zwei Funktionsflächen des Bauteils vorgegeben.

Zusätzlich oder alternativ ist bzw. wird für den zweiten tolerierten Parameter in einer Ausführung eine Formtoleranz oder Lagetoleranz, in einer Ausführung eine Formtoleranz für eine Ebenheit und/oder eine Form- oder Lagetoleranz für eine dieser (zwei) Funktionsflächen vorgegeben.

Es hat sich überraschend herausgestellt, dass gerade Abweichungen innerhalb von Maßtoleranzen und Abweichungen innerhalb von Form- oder Lagetoleranzen durcheinander kompensiert werden können, insbesondere starke Abweichungen von Abständen zwischen Funktionsflächen von ihren Sollwerten durch geringe Abweichungen von einer Sollform einer dieser Funktionsflächen.

Entsprechend kann in einer Ausführung der erste und/oder zweite Parameter (jeweils)

- ein Maß, insbesondere eine Länge, einen Abstand, insbesondere eine lichte Weite, insbesondere einen Durchmesser, oder dergleichen,

- eine Form, insbesondere eine Geradheit, Ebenheit, Rundheit, Zylinderform, Profilform einer Linie, Profilform einer Fläche oder dergleichen, oder
- eine Lage, insbesondere eine Position, Koaxialität, Symmetrie, Parallelität, Rechtwinkligkeit, Neigung, einen (Gesamt)Rundlauf, (Gesamt)Planlauf oder dergleichen

aufweisen, insbesondere sein bzw. beschreiben bzw. definieren.

In einer Ausführung wird bzw. ist der vorgegebene Toleranzbereich auf einer Zeichnung des Bauteils angegeben, vorzugsweise wenigstens teilweise, insbesondere für die obere und/oder untere Grenze für den zweiten Parameter in dem ersten und/oder zweiten zulässigen Wertebereich des ersten Parameters, in Funktions-, insbesondere Ungleichungsform.

Hierdurch kann in einer Ausführung die Prüfung vereinfacht, ihre Zuverlässigkeit erhöht und/oder die hierfür benötigte Zeit reduziert werden.

Ein Ermitteln eines Parameters umfasst in einer Ausführung ein ein- oder mehrmaliges Messen.

Nach einer Ausführung der vorliegenden Erfindung ist ein System hardware-und/oder software-, insbesondere programmtechnisch, zur Durchführung eines hier beschriebenen Verfahrens eingerichtet. Das System kann aufweisen:

- Mittel zum Ermitteln eines Wertes eines ersten tolerierten Parameters des Bauteils;
- Mittel zum Ermitteln eines Wertes eines zweiten tolerierten Parameters des Bauteils; und
- Mittel zum Klassifizieren des Bauteils in eine vorgegebene Güteklasse, falls dieses Wertepaar außerhalb eines vorgegebenen Toleranzbereichs liegt, dessen obere und/oder untere Grenze für den zweiten Parameter in wenigstens einem ersten zulässigen Wertebereich des ersten Parameters, insbesondere linear, von dem ersten Parameter abhängt.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit, insbesondere wenigstens eine CPU, und/oder ein oder mehrere Programme oder Programmmodule aufweisen. Die Verarbeitungseinheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die Verarbeitungseinheit die Schritte solcher Verfahren ausführen kann und damit insbesondere das Bauteil prüfen kann. Ein Computerprogrammprodukt kann in einer Ausführung ein, insbesondere nicht-flüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch das System bzw. sein(e) Mittel.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:

Fig. 1     ein Verfahren nach einer Ausführung der vorliegenden Erfindung;

Fig. 2:    einen Ausschnitt einer bei dem Verfahren verwendeten Bauteilzeichnung;

Fig. 3     einen bei dem Verfahren verwendeten vorgegebenen Toleranzbereich; und

Fig. 4     ein System zum Durchführen des Verfahrens.

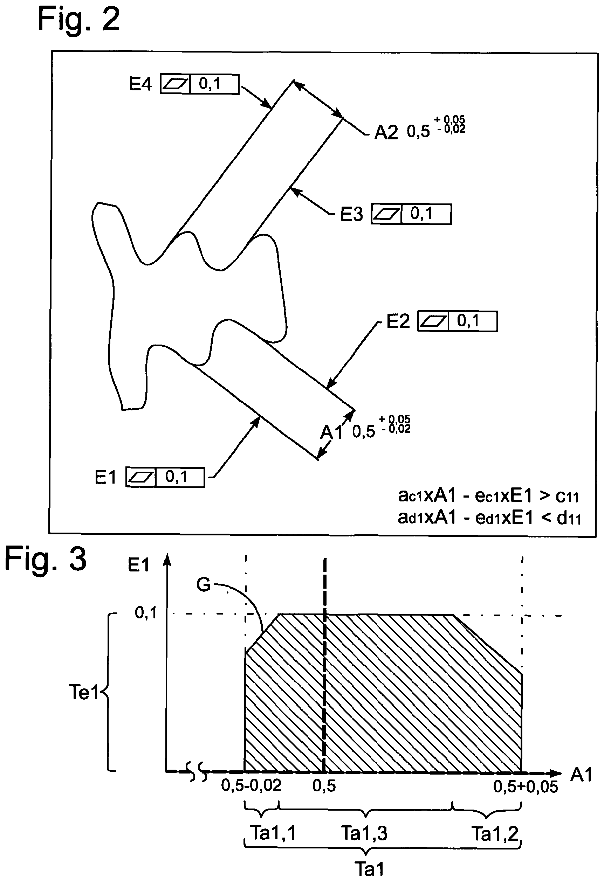

Fig. 2 zeigt einen Ausschnitt einer Bauteilzeichnung für eine Schaufel mit einem tannenbaumartigen Schaufelfuß zur Befestigung der Schaufel in einer entsprechenden Nut eines Rotors oder Gehäuses einer Gasturbine.

Die Abstände A1, A2 zwischen Funktionsflächen des Schaufelfußes sind toleriert und bilden jeweils einen ersten tolerierten Parameter dieses Bauteils.

Außerdem sind die Ebenheiten bzw. Planaritäten E1,...,E4 dieser Funktionsflächen toleriert und bilden jeweils einen zweiten tolerierten Parameter dieses Bauteils. Dabei gibt der Wert der entsprechenden Ebenheit in fachüblicher Weise den zulässigen Ebenenabstand zwischen zwei parallelen Flächen an, die zwischen sich eine spaltförmige Toleranzzone definieren, in der die Funktionsfläche liegen soll.

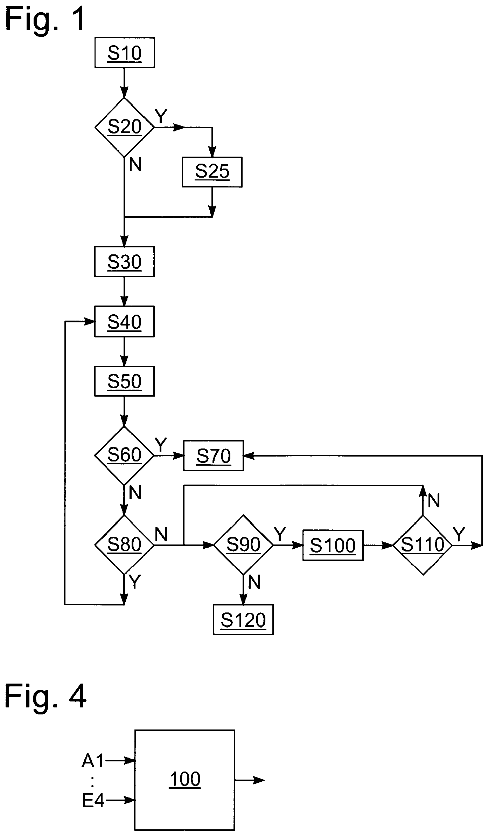

In einem ersten Schritt S10 (vgl. Fig. 1) werden Toleranzen für diese und gegebenenfalls weitere Bauteilparameter vorgegeben.

In einem zweiten Schritt S20 wird für Kombinationen dieser Bauteilparameter geprüft, ob eine starke Abweichung des Istwertes eines Parameters von seinem Soll- bzw. Nennmaß durch eine ausreichend geringe Abweichung des Istwertes des anderen Parameters von seinem Soll- bzw. Nennmaß kompensiert werden kann. Solche Kombinationen können beispielsweise von der Strukturmechanik identifiziert und hierfür jeweils entsprechende Abhängigkeiten vorgegeben werden.

Für solche Kombinationen (S20: "Y"), im Ausführungsbeispiel die Kombinationen (A1, E1), (A1, E2), (A2, E3) und (A2, E4), wird in einem Schritt S25 jeweils ein entsprechender Toleranzbereich vorgegeben, für die anderen Kombinationen (S20: "N"), beispielsweise (A1, E3), nicht.

Fig. 3 zeigt exemplarisch den vorgegebenen Toleranzbereich für den ersten tolerierten Bauteilparameter A1 und den zweiten tolerierten Bauteilparameter E1: Fett gestrichelt sind die Soll- bzw. Nennmaße für die beiden Parameter eingezeichnet, dünn strichpunktiert die maximalen Toleranzfelder Ta1, Te1 für die beiden Parameter.

Durch die in der Bauteilzeichnung angegebene Ungleichung

$$a_{c1} \times A1 - e_{c1} \times E1 > c_{11}$$

hängt die obere Grenze G für den zweiten Parameter in einem ersten zulässigen Wertebereich Ta1,1 des ersten Parameters, der den minimal zulässigen Wert 0,48 des ersten Parameters enthält, linear von dem ersten Parameter ab.

In analoger Weise hängt die obere Grenze G für den zweiten Parameter in einem zweiten zulässigen Wertebereich Ta1,2 des ersten Parameters, der den maximal zulässigen Wert 0,55 des ersten Parameters enthält, durch die in der Bauteilzeichnung angegebene Ungleichung

$$a_{d1} \times A1 - e_{d1} \times E1 < d_{11}$$

gegensinnig hierzu linear von dem ersten Parameter ab.

In dem dazwischenliegenden weiteren zulässigen Wertebereich Ta1,3 des ersten Parameters ist die obere Grenze des Toleranzbereichs für den zweiten Parameter von dem ersten Parameter unabhängig.

In einem Schritt S30 werden die entsprechenden Ungleichungen zusammen mit den maximal zulässigen Toleranzfeldern der Parameter A1,..., E4 auf der Bauteilzeichnung angegeben, wie in Fig. 2 für die maximal zulässigen Toleranzfelder der Parameter A1,..., E4 und den oben beschriebenen Toleranzbereich für die Kombination (A1, E1) angedeutet.

In einem Schritt S40 werden nun für ein konkretes Bauteil die Werte der ersten Parameter A1, A2 gemessen, in einem Schritt S50 die Werte der zweiten Parameter E1,..., E4 mittels Messung ermittelt.

Dann wird in einem Schritt S60 (jeweils) geprüft, ob für eine (noch nicht geprüfte) der Kombinationen, für die ein Toleranzbereich vorgegebenen ist, das entsprechende Wertepaar außerhalb dieses vorgegebenen Toleranzbereichs liegt.

Ist dies der Fall (S60: "Y"), wird das Bauteil als Ausschuss klassifiziert (Fig. 1: Schritt S70).

Andernfalls (S60: "N") wird geprüft, ob für weitere (noch nicht geprüfte) Kombinationen ein gemeinsamer Toleranzbereich vorgegebenen ist. Ist dies der Fall (S80: "Y"), wird Schritt S60 für diese Kombination erneut durchgeführt.

Andernfalls (S80: "N") wird geprüft, ob für wenigstens einen dritten Parameter ein Toleranzfeld vorgegeben ist, der noch nicht überprüft worden ist.

Ist dies der Fall (S90: "Y"), wird der entsprechende Wert gemessen (S100) und geprüft, ob dieser außerhalb dieses vorgegebenen Toleranzfeldes liegt.

Ist dies der Fall (S110: "Y"), wird das Bauteil ebenfalls als Ausschuss klassifiziert (S70).

Andernfalls (S110: "N") wird Schritt S90 erneut durchgeführt.

Wird in diesem festgestellt, dass für keinen (weiteren bzw. bisher ungeprüften) dritten Parameter ein Toleranzfeld vorgegeben ist (S90: "N"), wird die Prüfung beendet (S120).

Fig. 4 zeigt ein System zur wenigstens teilweise automatisierten Durchführung des oben beschriebenen Verfahrens in Form eines Rechners 100, der dazu eingerichtet ist, auf Basis eingegebener Werte für die ersten und zweiten sowie gegebenenfalls dritten Parameter das Bauteil als Ausschuss oder gut zu klassifizieren.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen.

Bezugszeichenliste

| 100 | Rechner (System) |
|---|---|
| A1, A2 | Abstand zwischen Funktionsflächen (erster Parameter) |
| E1,..., E4 | Ebenheit einer Funktionsfläche (zweiter Parameter) |
| G | obere Grenze |
| Ta1 | maximales erstes Toleranzfeld |
| Ta1,1 | erster zulässiger Wertebereich des ersten Parameters |
| Ta1,2 | zweiter zulässiger Wertebereich des ersten Parameters |
| Ta1,3 | weiterer zulässiger Wertebereich des ersten Parameters |
| Te1 | maximales zweites Toleranzfeld |

**Patentansprüche**

1.  Verfahren zur Prüfung eines Bauteils, insbesondere eines Flugtriebwerks, mit den Schritten:

    - Ermitteln (S40) eines Wertes eines ersten tolerierten Parameters (A1; A2) des Bauteils;
    - Ermitteln (S50) eines Wertes eines zweiten tolerierten Parameters (E1;...; E4) des Bauteils; und
    - Klassifizieren (S70) des Bauteils in eine vorgegebene Güteklasse, falls dieses Wertepaar außerhalb eines vorgegebenen Toleranzbereichs liegt, dessen obere und/oder untere Grenze (G) für den zweiten Parameter in wenigstens einem ersten zulässigen Wertebereich (Ta1,1) des ersten Parameters, insbesondere linear, von dem ersten Parameter abhängt;

    wobei ein Ermitteln eines Parameters ein ein- oder mehrmaliges Messen umfasst und/oder ein oder mehrere der Schritte wenigstens teilweise automatisiert durchgeführt werden.

2.  Verfahren nach dem vorhergehenden Anspruch, **dadurch gekennzeichnet, dass** die obere und/oder untere Grenze (G) des Toleranzbereichs für den zweiten Parameter in wenigstens einem zweiten zulässigen Wertebereich (Ta1,2) des ersten Parameters, insbesondere linear, gegensinnig zu dem ersten zulässigen Wertebereich von dem ersten Parameter abhängt.

3.  Verfahren nach einem der vorhergehenden Ansprüche, **dadurch gekennzeichnet, dass** der erste zulässige Wertebereich des ersten Parameters einen minimal oder maximal zulässigen Wert des ersten Parameters enthält.

4.  Verfahren nach dem vorhergehenden Anspruch, **dadurch gekennzeichnet, dass** der erste zulässige Wertebereich des ersten Parameters einen minimal zulässigen Wert des ersten Parameters und der zweite zulässige Wertebereich des ersten Parameters einen maximal zulässigen Wert des ersten Parameters enthält.

5.  Verfahren nach einem der vorhergehenden Ansprüche, **dadurch gekennzeichnet, dass** die obere und/oder untere Grenze des Toleranzbereichs für den zweiten Parameter in wenigstens einem weiteren zulässigen Wertebereich (Ta1,3) des ersten Parameters von dem ersten Parameter unabhängig ist.

6.  Verfahren nach einem der vorhergehenden Ansprüche, **gekennzeichnet durch** Schritte:

    - Ermitteln (S100) eines Wertes wenigstens eines dritten tolerierten Parameters des Bauteils; und
    - Klassifizieren (S70) des Bauteils in die Güteklasse, falls dieser Wert außerhalb eines vorgegebenen dritten Toleranzfeldes liegt.

7.  Verfahren nach einem der vorhergehenden Ansprüche, **gekennzeichnet durch** wenigstens einen der Schritte:

    - Klassifizieren (S70) des Bauteils in die Güteklasse, falls der Wert des ersten Parameters außerhalb eines vorgegebenen maximalen ersten Toleranzfeldes (Ta1) liegt; und/oder

- Klassifizieren (S70) des Bauteils in die Güteklasse, falls der Wert des zweiten Parameters außerhalb eines vorgegebenen maximalen zweiten Toleranzfeldes (Te1) liegt.

**8.** Verfahren nach einem der vorhergehenden Ansprüche, **dadurch gekennzeichnet, dass** das Bauteil verworfen oder nachbearbeitet wird, falls es in die Güteklasse klassifiziert worden ist.

**9.** Verfahren nach einem der vorhergehenden Ansprüche, **dadurch gekennzeichnet, dass** die Abhängigkeit der oberen und/oder unteren Grenze des zulässigen Toleranzfeldes für den zweiten Parameter von dem ersten Parameter in dem ersten und/oder zweiten zulässigen Wertebereich des ersten Parameters auf Basis einer, insbesondere strukturmechanischen, Eigenschaft, insbesondere Funktionsfähigkeit, des Bauteiltyps vorgegeben ist, die von einer Kombination des ersten und zweiten Parameters abhängt.

**10.** Verfahren zum Vorgeben des Toleranzbereichs zur Prüfung eines Bauteils nach einem Verfahren nach einem der vorhergehenden Ansprüche, **dadurch gekennzeichnet, dass** die Abhängigkeit der oberen und/oder unteren Grenze des zulässigen Toleranzfeldes für den zweiten Parameter von dem ersten Parameter in dem ersten und/oder zweiten zulässigen Wertebereich des ersten Parameters auf Basis einer, insbesondere strukturmechanischen, Eigenschaft, insbesondere Funktionsfähigkeit, des Bauteiltyps vorgegeben wird (S25), die von einer Kombination des ersten und zweiten Parameters abhängt.

**11.** Verfahren nach einem der vorhergehenden Ansprüche, **dadurch gekennzeichnet, dass** das Bauteil eine Lauf- oder Leitschaufel einer Gasturbine ist und/oder für den ersten Parameter eine Maßtoleranz, insbesondere einer Länge oder eines Abstandes, insbesondere zwischen zwei Funktionsflächen, und/oder für den zweiten Parameter eine Form- oder Lagetoleranz, insbesondere für eine Ebenheit und/oder eine dieser Funktionsflächen, vorgegeben ist.

**12.** Verfahren nach einem der vorhergehenden Ansprüche, **dadurch gekennzeichnet, dass** der vorgegebene Toleranzbereich auf einer Zeichnung des Bauteils angegeben ist.

**13.** System (100) zur Prüfung eines Bauteils, insbesondere eines Flugtriebwerks, das zur Durchführung eines Verfahrens nach einem der vorhergehenden Ansprüche eingerichtet ist, wobei das System hardware- und/oder softwaretechnisch, insbesondere programmtechnisch, zur wenigstens teilweise automatisierten Durchführung eines oder mehrerer der Schritte des Verfahrens eingerichtet ist.

**14.** Computerprogrammprodukt mit einem Programmcode, der auf einem von einem Computer lesbaren Medium gespeichert ist, zur Durchführung eines Verfahrens nach einem der Ansprüche 1 bis 12.

**Claims**

**1.** Method for testing a component, in particular an aircraft engine, comprising the steps of:

- determining (S40) a value of a first tolerated parameter (A1; A2) of the component;
- determining (S50) a value of a second tolerated parameter (E1 ;...:E4) of the component; and
- classifying (S70) the component into a predefined quality class if this pair of values lies outside a predefined tolerance range, the upper and/or lower limit (G) of which for the second parameter is dependent on the first parameter in at least a first permissible value range (Ta1, 1) of the first parameter, in particular linearly; wherein determination of a parameter comprises measuring one or more times and/or one or more of the steps being carried out in an at least partially automated manner.

**2.** Method according to the preceding claim, **characterized in that** the upper and/or lower limit (G) of the tolerance range for the second parameter is dependent on the first parameter in at least a second permissible value range (Ta1, 2) of the first parameter, in particular linearly, inversely to the first permissible value range.

**3.** Method according to either of the preceding claims, **characterized in that** the first permissible value range of the first parameter contains a minimum or maximum permissible value of the first parameter.

**4.** Method according to the preceding claim, **characterized in that** the first permissible value range of the first parameter contains a minimum permissible value of the first parameter and the second permissible value range of the first parameter contains a maximum permissible value of the first parameter.

5. Method according to any of the preceding claims, **characterized in that** the upper and/or lower limit of the tolerance range for the second parameter is independent of the first parameter in at least one further permissible value range (Ta1, 3) of the first parameter.

6. Method according to any of the preceding claims, **characterized by** the steps of:

   - determining (S100) a value of at least a third tolerated parameter of the component; and
   - classifying (S70) the component into the quality class if this value lies outside a predefined third tolerance field.

7. Method according to any of the preceding claims **characterized by** at least one of the steps of:

   - classifying (S70) the component into the quality class if the value of the first parameter lies outside a predetermined maximum first tolerance field (Ta1); and/or
   - classifying (S70) the component into the quality class if the value of the second parameter lies outside a predefined maximum second tolerance field (Te1).

8. Method according to any of the preceding claims, **characterized in that** the component is discarded or reworked if it has been classified into the quality class.

9. Method according to any of the preceding claims, **characterized in that** the dependence of the upper and/or lower limit of the permissible tolerance field for the second parameter is predefined by the first parameter in the first and/or second permissible value range of the first parameter on the basis of an in particular structurally mechanical property, in particular functionality, of the component type, which property is dependent on a combination of the first and second parameters.

10. Method for specifying the tolerance range for testing a component according to a method according to any of the preceding claims,
    **characterized in that** the dependence of the upper and/or lower limit of the permissible tolerance field for the second parameter is predefined (S25) by the first parameter in the first and/or second permissible value range of the first parameter on the basis of an in particular structurally mechanical property, in particular functionality, of the component type, which property is dependent on a combination of the first and second parameters.

11. Method according to any of the preceding claims, **characterized in that** the component is a moving vane or guide vane of a gas turbine, and/or a dimensional tolerance, in particular a length or a distance, in particular between two functional surfaces, is predefined for the first parameter, and/or a shape or position tolerance, in particular for flatness and/or one of these functional surfaces, is predefined for the second parameter.

12. Method according to any of the preceding claims, **characterized in that** the predetermined tolerance range is specified in a drawing of the component.

13. System (100) for testing a component, in particular an aircraft engine, which is designed to execute a method according to any of the preceding claims, wherein the system is designed to execute, in an at least partially automated manner, one or more of the steps of the method in terms of hardware and/or software, in particular in terms of programming.

14. Computer program product for executing a method according to any of claims 1 to 12, comprising a program code stored on a computer-readable medium.

**Revendications**

1. Procédé permettant de tester un composant, en particulier un moteur d'aéronef, comportant les étapes suivantes :

   - détermination (S40) d'une valeur d'un premier paramètre toléré (A1 ; A2) du composant ;
   - détermination (S50) d'une valeur d'un deuxième paramètre toléré (E1 ;...; E4) du composant ; et

**EP 3 977 220 B1**

- classification (S70) du composant dans une classe de qualité prédéfinie si ladite paire de valeurs se situe en dehors d'une plage de tolérance prédéfinie, dont la limite supérieure et/ou inférieure (G) pour le deuxième paramètre dans au moins une première plage de valeurs admissible (Ta1,1) du premier paramètre dépend, en particulier de manière linéaire, du premier paramètre ;

dans lequel une détermination d'un paramètre comprend une mesure une ou plusieurs fois et/ou une ou plusieurs des étapes sont mises en oeuvre de manière au moins partiellement automatisée.

2. Procédé selon la revendication précédente, **caractérisé en ce que** la limite supérieure et/ou inférieure (G) de la plage de tolérance pour le deuxième paramètre dans au moins une seconde plage de valeurs admissible (Ta1,2) du premier paramètre dépend, en particulier de manière linéaire, du premier paramètre dans le sens opposé à la première plage de valeurs admissible.

3. Procédé selon l'une des revendications précédentes, **caractérisé en ce que** la première plage de valeurs admissible du premier paramètre contient une valeur admissible minimale ou maximale du premier paramètre.

4. Procédé selon la revendication précédente, **caractérisé en ce que** la première plage de valeurs admissible du premier paramètre contient une valeur admissible minimale du premier paramètre et la seconde plage de valeurs admissible du premier paramètre contient une valeur admissible maximale du premier paramètre.

5. Procédé selon l'une des revendications précédentes, **caractérisé en ce que** la limite supérieure et/ou inférieure de la plage de tolérance pour le deuxième paramètre dans au moins une autre plage de valeurs admissible (Ta1,3) du premier paramètre ne dépend pas du premier paramètre.

6. Procédé selon l'une des revendications précédentes, **caractérisé par** les étapes suivantes :

- détermination (S100) d'une valeur d'au moins un troisième paramètre toléré du composant ; et
- classification (S70) du composant dans la classe de qualité si ladite valeur se situe en dehors d'un troisième champ de tolérance prédéfini.

7. Procédé selon l'une des revendications précédentes, **caractérisé par** au moins l'une des étapes suivantes :

- classification (S70) du composant dans la classe de qualité si la valeur du premier paramètre se situe en dehors d'un premier champ de tolérance (Ta1) maximal prédéfini ; et/ou
- classification (S70) du composant dans la classe de qualité si la valeur du deuxième paramètre se situe en dehors d'un deuxième champ de tolérance (Te1) maximal prédéfini.

8. Procédé selon l'une des revendications précédentes, **caractérisé en ce que** le composant est rejeté ou retravaillé s'il a été classifié dans la classe de qualité.

9. Procédé selon l'une des revendications précédentes, **caractérisé en ce que** la dépendance de la limite supérieure et/ou inférieure du champ de tolérance admissible pour le deuxième paramètre par rapport au premier paramètre dans la première et/ou seconde plage de valeurs admissible du premier paramètre est prédéfinie sur la base d'une propriété, en particulier se rapportant à la mécanique de la structure, en particulier du bon fonctionnement, du type de composant, laquelle propriété dépend d'une combinaison des premier et deuxième paramètres.

10. Procédé permettant de prédéfinir la plage de tolérance pour le test d'un composant selon un procédé selon l'une des revendications précédentes, **caractérisé en ce que** la dépendance de la limite supérieure et/ou inférieure du champ de tolérance admissible pour le deuxième paramètre par rapport au premier paramètre dans la première et/ou seconde plage de valeurs admissible du premier paramètre est prédéfinie (S25) sur la base d'une propriété, en particulier se rapportant à la mécanique de la structure, en particulier du bon fonctionnement, du type de composant, laquelle propriété dépend d'une combinaison des premier et deuxième paramètres.

11. Procédé selon l'une des revendications précédentes, **caractérisé en ce que** le composant est une aube mobile ou une aube directrice d'une turbine à gaz et/ou une tolérance dimensionnelle, en particulier une longueur ou une distance, en particulier entre deux surfaces fonctionnelles, est prédéfinie pour le premier paramètre, et/ou une tolérance de forme ou de position, en particulier pour une planéité et/ou l'une desdites surfaces fonctionnelles, est prédéfinie pour le deuxième paramètre.

12. Procédé selon l'une des revendications précédentes,
**caractérisé en ce que** la plage de tolérance prédéfinie est indiquée sur un dessin du composant.

13. Système (100) permettant de tester un composant, en particulier un moteur d'aéronef, lequel système est configuré pour la mise en oeuvre d'un procédé selon l'une des revendications précédentes, dans lequel le système est configuré pour la mise en oeuvre au moins partiellement automatisée d'une ou de plusieurs des étapes du procédé selon la technique matérielle et/ou la technique logicielle, en particulier la technique de programmation.

14. Produit programme informatique comportant un code de programme, lequel est stocké sur un support lisible par ordinateur, pour la mise en oeuvre d'un procédé selon l'une des revendications 1 à 12.

# Fig. 1

# Fig. 4

# Fig. 2

E4 ▱ 0,1

A2 $0{,}5^{+0{,}05}_{-0{,}02}$

E3 ▱ 0,1

E2 ▱ 0,1

A1 $0{,}5^{+0{,}05}_{-0{,}02}$

E1 ▱ 0,1

$a_{c1} \times A1 - e_{c1} \times E1 > c_{11}$
$a_{d1} \times A1 - e_{d1} \times E1 < d_{11}$

# Fig. 3

E1

G

0,1

Te1

Ta1,1   Ta1,3   Ta1,2

0,5-0,02   0,5   0,5+0,05   A1

Ta1

**IN DER BESCHREIBUNG AUFGEFÜHRTE DOKUMENTE**

**In der Beschreibung aufgeführte Patentdokumente**

- EP 2993541 A1
- WO 2016046729 A1
- EP 3082004 A2
- EP 3045992 A1